# DEMANDE DE BREVET EUROPEEN

(11) **EP 2 229 909 A1**
(43) Date de publication de la demande: **22.09.2010**
(21) Numéro de dépôt: 10156508.3
(22) Date de dépôt: 15.03.2010
(51) Int. Cl.: A61C 1/08

(54) **Dispositif de guidage d'outil de perçage pour la mise en place d'au moins un implant dentaire**

(30) Priorité: 16.03.2009 FR 0901243
(71) Demandeur: Blouzard, François, 21000 Dijon (FR)
(72) Inventeur: Blouzard, François, 21000 Dijon (FR)
(74) Mandataire: Maureau, Philippe

(57) **Abrégé**

Ce dispositif de guidage (2) comporte un corps (3), réalisé en matière thermoformable, comportant une échancrure (4) délimitant deux parties latérales (5) destinées à être thermoformées pour former des parties de recouvrement agencées pour s'adapter sur les dents adjacentes à un édentement et/ou sur au moins une portion de la muqueuse buccale adjacente à l'édentement, et une partie médiane de liaison (6) s'étendant dans le prolongement de l'échancrure, et au moins un index de guidage (12) comportant des première et seconde portions (12a, 12b) reliées l'une à l'autre, la première portion (12a) étant reliée à la partie de liaison (6) du corps, la seconde portion (12b) comportant un alésage traversant (15) dont l'axe est agencé pour s'étendre sensiblement selon l'axe géométrique d'une dent manquante ou un axe de perçage prédéterminé, lorsque les parties de recouvrement sont adaptées sur les dents adjacentes à l'édentement et/ou sur la muqueuse buccale.

## Description

La présente invention concerne un dispositif de guidage d'outil de perçage et un procédé de positionnement d'un axe de perçage pour la mise en place d'au moins un implant dentaire.

Ce type de dispositif de guidage est utilisé lorsque la dentition d'un patient est fortement dégradée et nécessite le remplacement de dents manquantes par des prothèses dentaires. Ces prothèses dentaires sont généralement solidarisées à la mâchoire du patient à l'aide d'implants dentaires cylindriques vissés ou impactés dans des logements ménagés dans l'os des maxillaires du patient.

La mise en place de ces implants dentaires se révèle délicate pour le chirurgien puisque ce dernier doit orienter les outils de perçage selon des axes très précis pour créer les logements destinés à recevoir les implants dentaires afin de ne pas léser des structures vasculaires ou nerveuses ou des cavités anatomiques du patient.

Il est connu, notamment par le document WO 2007/085719, de réaliser un dispositif de guidage d'outil de perçage comprenant une gouttière à appui dentaire ou muqueux, un insert de repérage au moins partiellement radio-opaque disposé dans la gouttière selon un axe de référence, et un guide de perçage comportant des première et seconde portions reliées l'une à l'autre, la première portion étant destinée à être insérée dans un logement ménagé dans l'insert de repérage, la seconde portion comportant des moyens de guidage des outils de perçage selon un axe de perçage déterminé.

Bien qu'un tel dispositif de guidage permet d'obtenir des résultats de très bonne qualité, sa réalisation nécessite une phase d'élaboration en laboratoire ou dans un centre spécialisé, ce qui implique des allers et retours entre le laboratoire et le cabinet dentaire compliquant la réalisation de ce dispositif de guidage et générant des coûts supplémentaires qui peuvent conduire le praticien à renoncer à l'utilisation de ces guides de forage.

Le document US 2005/0106531 décrit un dispositif de guidage d'outil de perçage pour la mise en place d'au moins un implant dentaire, comportant un corps, réalisé en matière thermoformable, destiné à s'adapter par thermoformage sur les dents d'un patient adjacentes à un édentement, et un guide de forage rigide monté sur le corps.

Lors du réchauffement du corps d'un tel dispositif de guidage pour réaliser son thermoformage, la zone de montage du guide de forage est également réchauffée, ce qui peut conduire à un ramollissement de cette zone de montage, et donc à un défaut de maintien du guide de forage par rapport au corps pouvant compromettre la qualité de forage obtenue à l'aide d'un tel dispositif de guidage. Il en résulte un risque de mauvais positionnement de l'implant dentaire dans le maxillaire

La présente invention vise à remédier à ces inconvénients.

Le problème technique à la base de l'invention consiste donc à fournir un dispositif de guidage d'outil de perçage qui soit de structure simple et peu onéreuse, tout en permettant de positionner avec précision et fiabilité l'implant dentaire dans le maxillaire.

A cet effet, la présente invention concerne un dispositif de guidage d'outil de perçage pour la mise en place d'au moins un implant dentaire, caractérisé ne ce qu'il comporte :
- un corps, réalisé en matière thermoformable, comportant une échancrure délimitant deux parties latérales destinées à être thermoformées pour former des parties de recouvrement agencées pour s'adapter sur les dents adjacentes à un édentement et/ou sur au moins une portion de la muqueuse buccale adjacente à l'édentement, et une partie médiane de liaison s'étendant dans le prolongement de l'échancrure,
- au moins un index de guidage comportant des première et seconde portions reliées l'une à l'autre, la première portion étant reliée à la partie de liaison du corps, la seconde portion comportant un alésage traversant dont l'axe est agencé pour s'étendre sensiblement selon l'axe géométrique d'une dent manquante ou un axe de perçage prédéterminé, lorsque les parties de recouvrement sont adaptées sur les dents adjacentes à l'édentement et/ou sur la muqueuse buccale.

Afin de thermoformer les parties latérales du corps en parties de recouvrement agencées pour s'adapter sur les dents et/ou la muqueuse buccale du patient, le chirurgien réalise un modèle, de préférence en plâtre, à partir d'une empreinte d'une zone édentée de la bouche du patient, positionne le dispositif de guidage sur le modèle de telle sorte que l'axe de la seconde portion de l'index de guidage s'étende sensiblement selon l'axe géométrique de la dent manquante, et thermoforme les parties latérales du corps sur les dents ou la muqueuse buccale du modèle de manière à obtenir les parties de recouvrement.

Ainsi, les parties latérales présentent, après leur thermoformage sur le modèle, une empreinte du profil extérieur des dents du patient adjacentes à l'édentement et/ou d'au moins une portion de la muqueuse buccale adjacente à l'édentement. Par conséquent, le fait de repositionner les parties latérales conformées en parties de recouvrement sur les dents et/ou la muqueuse buccale du patient impose un positionnement relatif de l'alésage de la seconde portion de l'index de guidage par rapport au maxillaire du patient identique à celui déterminé lors du positionnement de l'alésage de la seconde portion de l'index de guidage sur le modèle selon l'axe géométrique de la dent manquante.

De ce fait, le dispositif de guidage selon l'invention permet d'orienter un outil de perçage selon un axe très précis pour ménager un logement destiné à recevoir un implant dentaire.

En outre, étant donné que l'étape de thermoformage des parties latérales du corps peut être réalisée aisément au sein même du cabinet dentaire, il est possible de mettre en oeuvre rapidement et à prix réduit le dispositif de guidage selon l'invention. Cette simplicité de mise en oeuvre favorise l'utilisation d'un tel dispositif de guidage, gage d'amélioration de la précision, de la sécurité et du confort du geste chirurgical lors de la pose d'implants dentaires.

De plus, la présence d'une tel échancrure confère la possibilité de thermoformer les parties de recouvrement de telle sorte qu'elles recouvrent les faces verticales des dents bordant l'édentement. Ces dispositions améliorent la stabilité du dispositif de guidage sur la mâchoire du patient, et donc la réalisation du logement destiné à recevoir l'implant dentaire.

La présence d'une tel échancrure permet également de différencier les parties du corps devant être thermoformées de la partie de liaison à laquelle est reliée la première portion de l'index de guidage, et donc d'éviter une déformation non souhaitée de la portion de liaison. Ces dispositions permettent d'assurer un parfait maintien en position de l'index de guidage et par conséquent un positionnement satisfaisant de l'implant dentaire dans le maxillaire.

Il convient de noter qu'après thermoformage des parties latérales du corps, ce dernier forme sensiblement une gouttière à appui dentaire ou muqueux.

Selon un mode de réalisation, les parties de recouvrement sont agencées pour s'adapter respectivement d'une part sur les dents adjacentes à un édentement et d'autre part sur une portion de la muqueuse buccale adjacente à l'édentement.

De préférence, le corps comporte une partie plane destinée à s'étendre le long des faces vestibulaires des dents adjacentes à l'édentement ou de la face vestibulaire de la muqueuse buccale.

Avantageusement, l'axe géométrique de la première portion de l'index de guidage est sensiblement parallèle à l'axe de l'alésage ménagé dans la seconde portion de l'index de guidage.

De façon avantageuse, les première et seconde portions de l'index de guidage sont reliées l'une à l'autre par un bras de liaison destiné à s'étendre selon le plan médian vestibulo-lingual de la dent manquante.

Selon un premier mode de réalisation de l'invention, la première portion de l'index de guidage est montée de manière amovible sur la partie de liaison du corps.

Selon une variante de réalisation de l'invention, la partie de liaison du corps comporte un fourreau comprenant un logement dans lequel est destinée à être insérée la première portion de l'index de guidage.

De préférence, le fourreau comprend un évidement débouchant d'une part dans la surface externe du fourreau, et d'autre part dans le logement du fourreau, l'évidement s'étendant sur au moins une partie de la hauteur du fourreau sensiblement parallèlement à la direction d'insertion de la première portion de l'index de guidage dans le logement du fourreau.

De façon avantageuse, le fourreau comporte des rainures longitudinales agencées pour coopérer avec des nervures longitudinales ménagées sur la première portion de l'index de guidage de telle sorte que ladite première portion soit retenue par friction dans le fourreau.

Préférentiellement, l'axe du logement ménagé dans le fourreau est sensiblement parallèle à l'axe de l'alésage ménagé dans la seconde portion de l'index de guidage lorsque la première portion de ce dernier est insérée dans le logement ménagé dans le fourreau.

Selon une variante de réalisation de l'invention, l'index de guidage est fixé par vissage ou encliquetage sur la partie de liaison du corps.

Selon une autre variante de réalisation de l'invention, la partie de liaison du corps comporte un manchon, et l'index de guidage est agencé pour être monté coulissant dans ledit manchon selon une direction transversale à l'axe de l'alésage de la seconde portion de l'index de guidage, et de préférence selon une direction sensiblement perpendiculaire à l'axe de l'alésage de la seconde portion de l'index de guidage.

De préférence, le dispositif de guidage comporte des moyens de réglage agencés pour régler la position de l'index de guidage dans ledit manchon, les moyens de réglage étant de préférence montés de manière amovible sur la partie de liaison du corps.

Avantageusement, les moyens de réglage comportent une mollette de réglage, agencée pour être immobilisée en translation sur la partie de liaison du corps selon l'axe du manchon, comprenant une tige filetée, et la première portion de l'index de guidage comporte un alésage taraudé agencé pour coopérer avec la tige filetée de la molette de réglage.

De façon avantageuse, le dispositif de guidage comporte un plot radio-opaque, par exemple tubulaire, monté coaxialement dans l'alésage ménagé dans la seconde portion de l'index de guidage, le plot radio-opaque étant de préférence monté de manière amovible dans l'alésage ménagé dans la seconde portion de l'index de guidage.

Selon une variante de réalisation de l'invention, le dispositif de guidage comprend un premier index de guidage et un deuxième index de guidage, la première portion de chaque index de guidage étant agencée pour être montée de manière amovible sur la partie de liaison du corps. Le premier index de guidage peut par exemple être au moins partiellement radio-opaque.

Selon une première alternative, la partie de liaison du corps comporte un manchon dans lequel est susceptible d'être monté, au choix d'un opérateur, le premier ou le deuxième index de guidage, la première portion du premier index de guidage comporte au moins une patte d'encliquetage agencée pour coopérer avec une fente d'encliquetage ménagée dans la partie de liaison du corps, et le deuxième index de guidage est agencé pour être monté coulissant dans le manchon selon une direction transversale à l'axe de l'alésage de la seconde portion du deuxième index de guidage, et de préférence selon une direction sensiblement perpendiculaire à l'axe de l'alésage de la seconde portion de l'index de guidage.

Selon une deuxième alternative, l'orientation et la position relatives de l'axe géométrique de la première portion du premier index de guidage par rapport à l'axe géométrique de la seconde portion du premier index de guidage correspondent à l'orientation et la position relatives de l'axe géométrique de la première portion du deuxième index de guidage par rapport à l'axe géométrique de la seconde portion du deuxième index de guidage.

Selon un deuxième mode de réalisation de l'invention, l'index de guidage et le corps sont réalisés en une seule pièce, de préférence par moulage par injection.

L'index de guidage peut être métallique, et de préférence en acier inoxydable.

La présente invention concerne également un procédé de positionnement d'un axe de perçage pour la mise en place d'au moins un implant dentaire, **caractérisé en ce qu**'il comprend les étapes consistant à :
a) prévoir un dispositif de guidage selon l'invention,
b) réaliser un modèle, de préférence en plâtre, à partir d'une empreinte d'une zone édentée de la bouche du patient,
c) positionner le dispositif de guidage sur le modèle de telle sorte que l'axe de l'alésage de la seconde portion de l'index de guidage s'étende sensiblement selon l'axe géométrique de la dent manquante,
d) thermoformer les parties latérales du corps sur les dents du modèle adjacentes à l'édentement et/ou sur au moins une portion de la muqueuse buccale du modèle adjacente à l'édentement, de manière à former des parties de recouvrement agencées pour s'adapter sur les dents et/ou la muqueuse buccale du patient,
e) refroidir ou laisser refroidir les parties de recouvrement,
f) retirer le dispositif de guidage du modèle,
g) adapter les parties de recouvrement du dispositif de guidage sur les dents du patient adjacentes à l'édentement et/ou sur la portion de la muqueuse buccale du patient adjacente à l'édentement.

Lorsque le chirurgien souhaite réaliser un logement dans la mâchoire du patient destiné à recevoir un implant dentaire, il lui suffit d'introduire un outil de perçage, tel qu'un foret, selon l'axe de l'alésage ménagé dans la seconde portion de l'index de guidage.

Ainsi, l'axe de l'alésage ménagé dans la seconde portion de l'index de guidage constitue l'axe de perçage.

De préférence, l'étape de thermoformage des parties latérales du corps consiste à chauffer les parties latérales à l'aide d'un dispositif de chauffage, tel qu'une torche à gaz, de manière à les rendre malléables, et à presser ces dernières sur les dents du modèle adjacentes à l'édentement et/ou sur au moins une portion de la muqueuse buccale du modèle adjacente à l'édentement de telle sorte que les parties latérales épousent la forme des dents ou de la muqueuse buccale. L'étape de pressage est avantageusement réalisée à l'aide d'une masse en silicone.

Avantageusement, l'étape c) consiste à positionner le dispositif de guidage sur le modèle de telle sorte que l'axe de l'alésage de la seconde portion de l'index de guidage s'étende selon l'axe géométrique de la dent manquante, et le bras de liaison de l'index s'étende selon le plan médian vestibulo-lingual de la dent manquante.

De façon préférentielle, le procédé comprend une étape comprise entre les étapes f) et g) consistant à rectifier le corps du dispositif de guidage par meulage, de manière à ce qu'il puisse être positionné dans la bouche du patient sans risque de blessure.

De façon avantageuse, le procédé comprend une étape comprise entre les étapes c) et d) consistant à maintenir en position l'index de guidage par rapport au modèle par exemple par interposition de silicone auto durcissable, tel que du silicone fluide à empreinte, ou d'une résine autopolymérisable entre l'index de guidage et le modèle.

De préférence, le procédé comprend une étape consistant à positionner au moins un canon de perçage cylindrique dans l'alésage de la seconde portion de l'index de guidage. Un tel canon de perçage est utilisé avantageusement lorsque l'index de guidage est réalisé en matière plastique afin de ne pas dégrader l'alésage ou lorsque l'on souhaite réduire le diamètre de l'alésage afin de pouvoir guider successivement des forets de diamètres croissants jusqu'au diamètre adapté pour la mise en place de l'implant dans le logement osseux. Il serait par exemple possible de prévoir deux canons de perçage de diamètres intérieurs différents ou plus.

Préférentiellement, le procédé comprend une étape préalable à l'étape c) consistant à fixer une réplique de dent, comportant un logement ménagé selon l'axe géométrique de la réplique et dont la forme est similaire de celle de la couronne de la dent manquante, sur le modèle de telle sorte que la réplique soit située à la place de la dent manquante et que l'axe du logement ménagé dans la réplique coïncide avec l'axe géométrique de la dent manquante, l'étape c) consistant à insérer la seconde portion de l'index de guidage dans le logement ménagé dans la réplique. La réplique est avantageusement fixée sur le modèle à l'aide de silicone fluide à empreinte.

Il convient de noter que le chirurgien peut éventuellement ne pas réaliser le logement destiné à recevoir un implant dentaire directement après l'étape g).

Ainsi, le procédé peut comprendre une étape réalisée après l'étape g) consistant à :
- obtenir une visualisation de type radiographique de la mâchoire du patient équipé du dispositif de guidage,
- déterminer à partir des vues radiographiques obtenues un axe de perçage pour positionner l'implant dentaire,
- si nécessaire, chauffer la partie de liaison du corps de manière à la rendre malléable et déplacer l'index de guidage de manière à modifier l'orientation de la seconde portion de l'index de guidage afin que l'axe de l'alésage de cette dernière corresponde sensiblement à l'axe de perçage déterminé,
- adapter les parties de recouvrement du dispositif de guidage sur les dents du patient adjacentes à l'édentement et/ou sur la portion de la muqueuse buccale du patient adjacente à l'édentement.

Ainsi, selon cette variante de mise en oeuvre, le chirurgien utilise l'index de guidage dans un premier temps comme un guide de repérage et dans un second temps comme une guide de perçage.

Selon une variante de mise en oeuvre, l'étape consistant à chauffer la partie de liaison du corps et à déplacer l'index de guidage pourrait être remplacée par une étape consistant à chauffer le bras de liaison de l'index de guidage de manière à la rendre malléable et à déformer l'index de guidage de manière à modifier l'orientation de la seconde portion de l'index de guidage afin que l'axe de l'alésage de cette dernière corresponde sensiblement à l'axe de perçage déterminé.

Selon une autre variante de mise en oeuvre, l'étape consistant à chauffer la partie de liaison du corps et à déplacer l'index de guidage pourrait être remplacée par une étape consistant à déplacer l'index de guidage à l'aide des moyens de réglage de manière à modifier l'orientation de la seconde portion de l'index de guidage afin que l'axe de l'alésage de cette dernière corresponde sensiblement à l'axe de perçage déterminé.

Selon une variante de mise en oeuvre, l'étape a) consiste à prévoir un dispositif de guidage comportant un premier index de guidage comprenant au moins une patte d'encliquetage agencée pour coopérer avec une fente d'encliquetage ménagée dans la partie de liaison du corps, et un deuxième index de guidage agencé pour être monté coulissant dans le manchon selon une direction transversale à l'axe de l'alésage de la seconde portion du deuxième index de guidage, et à monter la première portion du premier index de guidage sur la partie de liaison du corps, et le procédé comprend une étape réalisée après l'étape g) consistant à :
- obtenir une visualisation de type radiographique de la mâchoire du patient équipé du dispositif de guidage,
- déterminer à partir des vues radiographiques obtenues un axe de perçage pour positionner l'implant dentaire,
- retirer la première portion du premier index de guidage de la partie de liaison du corps,
- monter la première portion du deuxième index de guidage sur la partie de liaison du corps,
- si nécessaire, déplacer le deuxième index de guidage à l'intérieur du manchon de manière à modifier l'orientation de la seconde portion du deuxième index de guidage afin que l'axe de l'alésage de cette dernière corresponde sensiblement à l'axe de perçage déterminé,
- adapter les parties de recouvrement du dispositif de guidage sur les dents du patient adjacentes à l'édentement et/ou sur la portion de la muqueuse buccale du patient adjacente à l'édentement.

Selon cette variante de mise en oeuvre, le chirurgien utilise le premier index de guidage comme un guide de repérage radiographique et le deuxième index de guidage comme une guide de perçage.

Selon une variante de mise en oeuvre, l'étape a) consiste à monter la première portion d'un premier index de guidage sur la partie de liaison du corps, et le procédé comprend une étape réalisée après l'étape g) consistant à:
- obtenir une visualisation de type radiographique de la mâchoire du patient équipé du dispositif de guidage,
- déterminer à partir des vues radiographiques obtenues un axe de perçage pour positionner l'implant dentaire,
- retirer la première portion du premier index de guidage de la partie de liaison du corps,
- réaliser sur mesure un deuxième index de guidage de sorte que l'orientation et la position relatives de l'axe géométrique de la première portion du deuxième index de guidage par rapport à l'axe de l'alésage de la seconde portion du deuxième index de guidage correspondent à l'orientation et la position relatives de l'axe géométrique de la première portion du premier index de guidage par rapport à l'axe de perçage déterminé,
- monter la première portion du deuxième index de guidage sur la partie de liaison du corps,
- adapter les parties de recouvrement du dispositif de guidage sur les dents du patient adjacentes à l'édentement et/ou sur la portion de la muqueuse buccale du patient adjacente à l'édentement.

De préférence, l'étape d'obtention d'une visualisation de type radiographique de la mâchoire du patient est précédée d'une étape consistant à monter un plot radio-opaque, de préférence tubulaire, dans l'alésage ménagé dans la seconde portion de l'index de guidage. Lorsque le dispositif de guidage comporte un index de repérage en matière plastique, le plot radio-opaque est avantageusement tubulaire de manière à pouvoir par la suite être utilisé comme canon de perçage.

De toute façon l'invention sera bien comprise à l'aide de la description qui suit en référence au dessin schématique annexé représentant, à titre d'exemples non limitatifs, plusieurs formes d'exécution de ce dispositif de guidage.
Figure 1 est une vue partielle en perspective arrière d'un dispositif de guidage selon un premier mode de réalisation.
Figure 2 est une vue en perspective, à l'échelle agrandie, du fourreau du dispositif de guidage de la figure 1.
Figure 3 est une vue partielle en perspective avant du dispositif de guidage de la figure 1.
Figure 4 est une vue en perspective du dispositif de guidage de la figure 1 équipé d'un premier index de guidage.
Figure 5 est une vue en perspective d'un modèle en plâtre d'un maxillaire présentant une édentation au niveau d'une dent.
Figure 6 est une vue en perspective du modèle de la figure 5 sur lequel a été positionnée une réplique de la dent manquante.
Figures 7 et 8 sont des vues en perspective du dispositif de guidage de la figure 4 positionné sur le modèle de la figure 6, montrant respectivement les parties latérales du corps avant et après thermoformage.
Figure 9 est une vue en perspective de corps du dispositif de la figure 1 après thermoformage des parties latérales du corps.
Figure10 est une vue en perspective du dispositif de la figure 9 équipé d'un second index de guidage.
Figures 11 et 12 sont des vues en perspective d'un dispositif de guidage selon un deuxième mode de réalisation positionné sur le modèle de la figure 6, montrant respectivement les parties latérales du corps avant et après thermoformage.
Figure 13 est une vue en perspective d'un dispositif de guidage selon un troisième mode de réalisation.
Figure 14 est une vue en perspective du dispositif de guidage de la figure 13 positionné sur un modèle en plâtre.
Figure 15 est une vue en perspective d'un dispositif de guidage selon un quatrième mode de réalisation.
Figure 16 est une vue en perspective d'un dispositif de guidage selon un cinquième mode de réalisation.

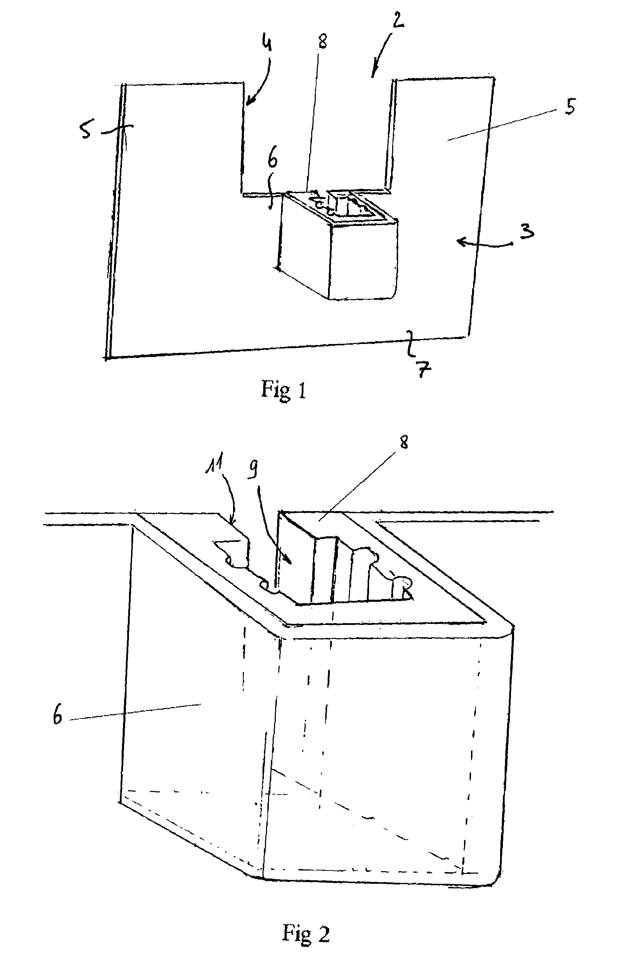

Les figures 1 à 4 et 10 représentent un dispositif de guidage 2 de foret de perçage pour la mise en place d'au moins un implant dentaire destiné à remplacer une dent manquante.

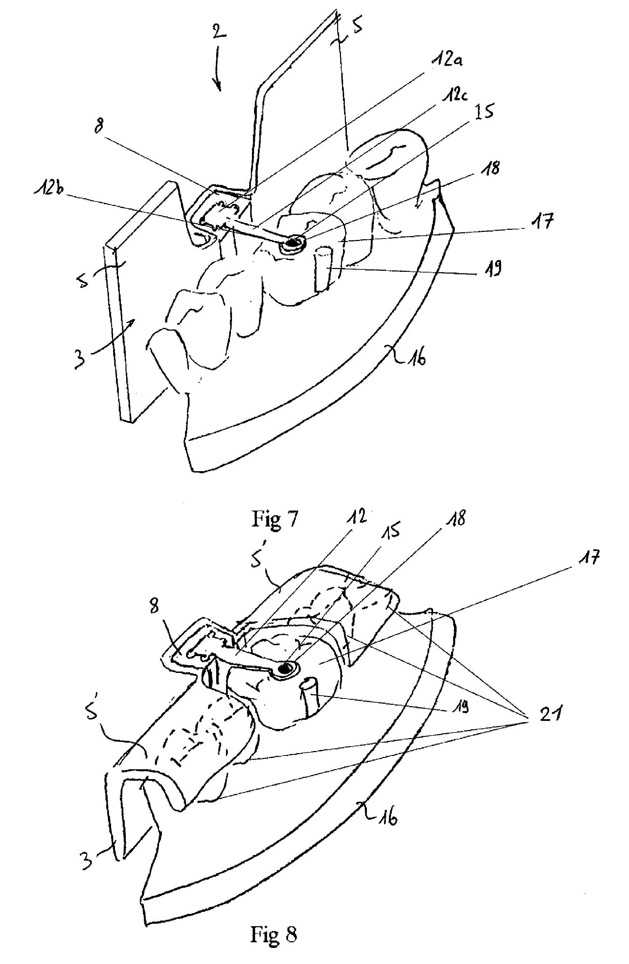

Le dispositif de guidage 2 comporte un corps 3, réalisé en matière thermoformable, comportant une échancrure 4 délimitant deux parties latérales 5 destinées à être thermoformées pour former des parties de recouvrement 5' (voir figure 8) agencées pour s'adapter sur les dents adjacentes à un édentement et/ou sur au moins une portion de la muqueuse buccale adjacente à l'édentement, une partie médiane de liaison 6 s'étendant dans le prolongement de l'échancrure 4, et une partie plane 7 destinée à s'étendre le long des faces vestibulaires des dents adjacentes à l'édentement et de la partie vestibulaire de la muqueuse buccale. Il convient de noter que les parties de recouvrement 5' sont destinées à s'étendre de part et d'autre de l'édentement, c'est-à-dire de part et d'autre d'une dent manquante.

La partie de liaison 6 comporte un fourreau 8, réalisé en matière plastique telle que du polyamide, comprenant un logement axial 9 et un évidement 11 débouchant d'une part dans la surface externe du fourreau, et d'autre part dans le logement axial, l'évidement 11 s'étendant sur la totalité de la hauteur du fourreau. Le fourreau présente avantageusement une section rectangulaire. Comme montré sur la figure 2, le fourreau 8 est rapporté sur le corps 3. Cependant, selon une variante de réalisation, le fourreau 8 et le corps 3 pourraient être réalisés par moulage par injection.

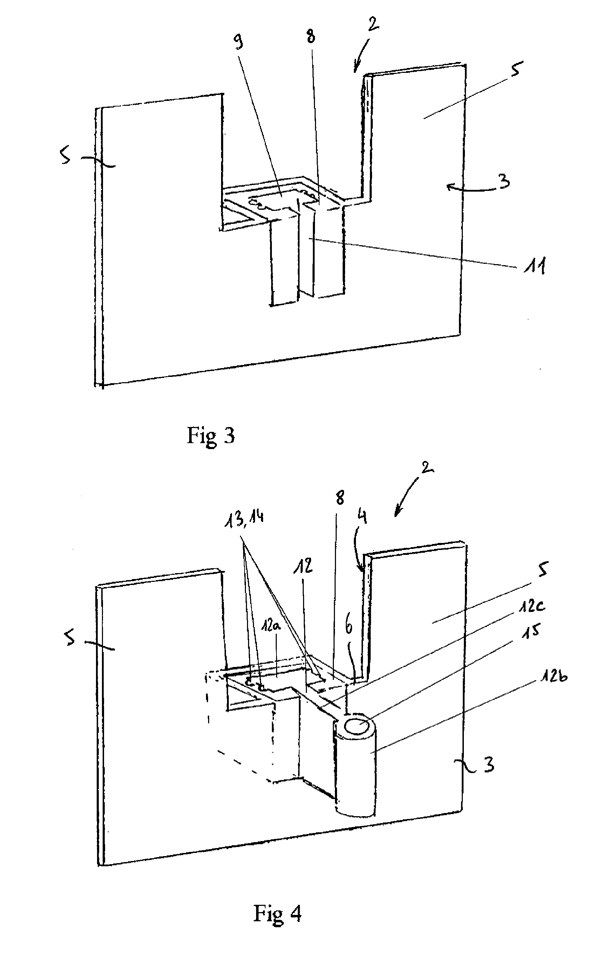

Comme montré sur la figure 4, le dispositif de guidage 2 comporte en outre un premier index de guidage 12 comportant des première et seconde portions 12a, 12b reliées l'une à l'autre par un bras de liaison 12c destiné à s'étendre selon le plan médian vestibulo-lingual de la dent manquante. La première portion 12a de l'index de guidage 12 est agencée pour être montée de manière amovible dans le logement 9 du fourreau 8, et comporte des nervures longitudinales 13 agencées pour coopérer avec des rainures longitudinales 14 ménagé sur le fourreau 8 de telle sorte que ladite première portion 12a de l'index de guidage 12 puisse être retenue par friction dans le fourreau. La première portion 12a de l'index de guidage 12 présente avantageusement une section rectangulaire.

La seconde portion 12b de l'index de guidage 12 comporte un alésage axial traversant 15 de section circulaire dont l'axe est agencé pour s'étendre sensiblement selon l'axe géométrique de la dent manquante, lorsque les parties de recouvrement 5' sont adaptées sur les dents adjacentes à l'édentement et/ou sur la muqueuse buccale. La seconde portion 12b de l'index de guidage 12 présente avantageusement une forme générale cylindrique.

Il convient de noter que l'axe géométrique de la première portion 12a de l'index de guidage 12 est sensiblement parallèle à l'axe de l'alésage 15 ménagé dans la seconde portion 12b de l'index de guidage. En outre, l'axe du logement 9 ménagé dans le fourreau 8 est de préférence sensiblement parallèle à l'axe de l'alésage 15 ménagé dans la seconde portion 12b de l'index de guidage 12 lorsque la première portion de ce dernier est insérée dans le logement 9 ménagé dans le fourreau 8.

Le dispositif de guidage 2 comporte en outre un deuxième index de guidage 12' métallique, et de préférence en acier inoxydable.

Le deuxième index de guidage 12' est similaire au premier index de guidage 12 et comporte des première et seconde portions 12'a, 12'b reliées l'une à l'autre par un bras de liaison 12'c destiné à s'étendre selon le plan médian vestibulo-lingual de la dent manquante. La première portion 12'a du deuxième index de guidage 12' est agencée pour être montée de manière amovible dans le logement 9 du fourreau 8, et comporte des nervures longitudinales 13' agencées pour coopérer avec les rainures longitudinales 14 ménagées sur le fourreau 8.

La seconde portion 12'b du deuxième index de guidage 12' comporte un alésage axial traversant 15' de section circulaire dont l'axe est agencé pour s'étendre sensiblement selon un axe de perçage prédéterminé lorsque les parties de recouvrement 5' sont adaptées sur les dents adjacentes à l'édentement et/ou sur la muqueuse buccale. La seconde portion 12'b de l'index de guidage 12' présente avantageusement une section rectangulaire.

Il convient de noter que l'axe géométrique de la première portion 12'a du deuxième index de guidage 12' peut ne pas être parallèle à l'axe de l'alésage 15' ménagé dans la seconde portion 12'b dudit index de guidage 12', et par exemple être incliné par rapport l'axe de l'alésage 15'. Ainsi, l'axe de l'alésage 15' ménagé dans la seconde portion 12'b de l'index de guidage 12' peut être incliné par rapport à l'axe du logement 9 ménagé dans le fourreau 8, lorsque la première portion dudit index de guidage 12' est insérée dans le logement 9 ménagé dans le fourreau 8.

Le procédé de perçage de la mâchoire d'un patient pour la mise en place d'au moins un implant dentaire, à l'aide du dispositif de guidage 2 va maintenant être décrit.

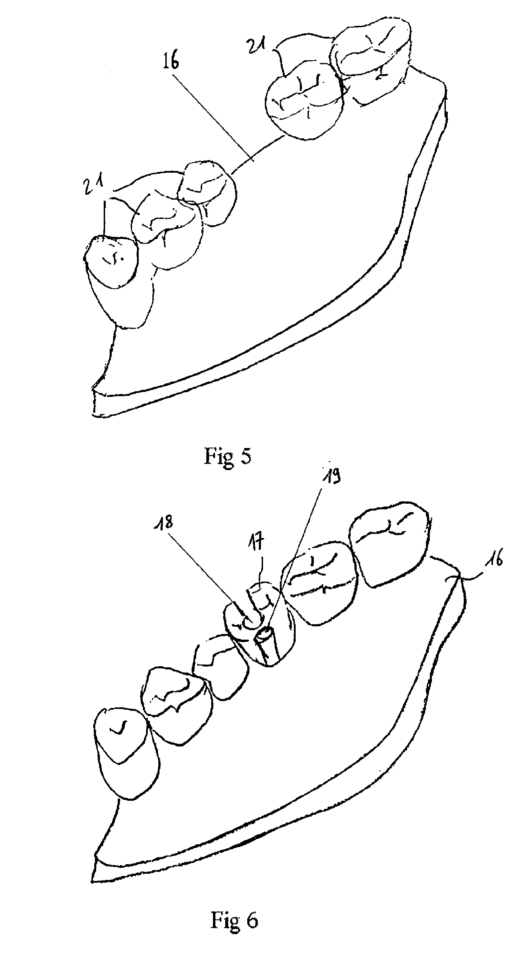

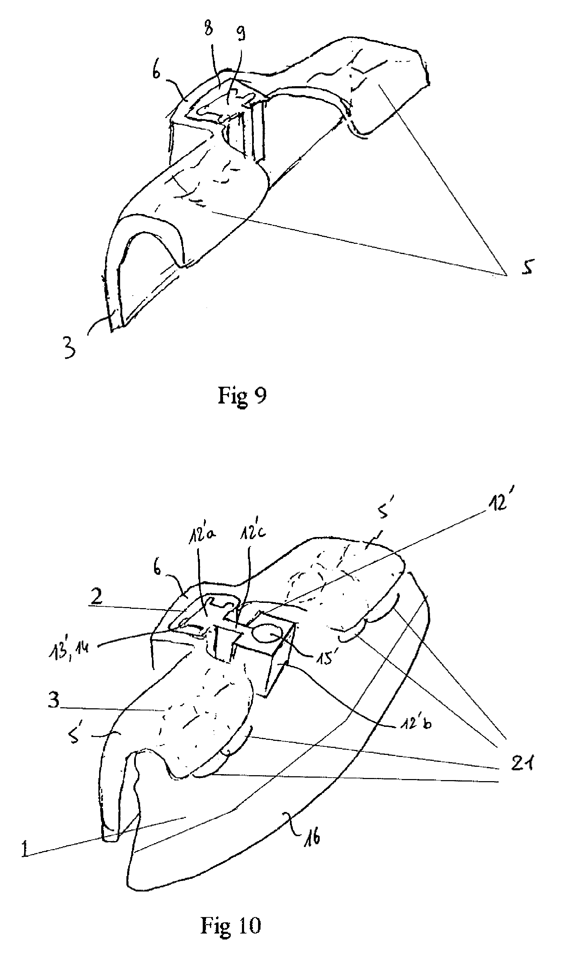

Un tel procédé comprend les étapes suivantes consistant à :
- réaliser un modèle 16, de préférence en plâtre, à partir d'une empreinte d'une zone édentée de la bouche du patient, comme cela est montré à la figure 5,
- fixer une réplique de dent 17, comportant un logement 18 ménagé selon l'axe géométrique de la réplique et dont la forme est similaire de celle de la couronne de la dent manquante, sur le modèle 16 (voir la figure 6) de telle sorte que la réplique soit située à la place de la dent manquante et que l'axe du logement 18 ménagé dans la réplique 17 coïncide avec l'axe géométrique de la dent manquante,
- insérer la première portion 12a du premier index de guidage 12 dans le logement 9 ménagé sur le fourreau 8, comme montré sur la figure 4,
- insérer la seconde portion 12b du premier index de guidage 12 dans le logement 18 ménagé dans la réplique 17 (voir la figure 7) de telle sorte que l'axe de la seconde portion 12b de l'index de guidage s'étende selon l'axe géométrique de la dent manquante, et le bras de liaison 12c de l'index s'étende selon le plan médian vestibulo-lingual de la dent manquante,
- thermoformer les parties latérales 5 du corps 3 sur les dents 21 du modèle 16 adjacentes à l'édentement, comme montré sur la figure 8, de manière à former les parties de recouvrement 5',
- refroidir (ou laisser refroidir) les parties de recouvrement 5' de telle sorte qu'elles redurcissent,
- retirer le dispositif de guidage 2 du modèle 16,
- insérer un plot radio-opaque (non représenté sur les figures) dans l'alésage 15 ménagé dans la seconde portion 12b de l'index de guidage 12,
- adapter les parties de recouvrement 5' du dispositif de guidage 2 sur la mâchoire du patient de telle sorte que les empreintes obtenues sur ces dernières lors de l'étape de thermoformage coopèrent avec les reliefs complémentaires des dents du patient adjacentes à l'édentement,
- obtenir une visualisation de type radiographique de la mâchoire du patient équipé du dispositif de guidage 2,
- déterminer à partir des vues radiographiques obtenues un axe de perçage pour positionner l'implant dentaire,
- retirer le dispositif de guidage de la bouche du patient,
- retirer la première portion 12a du premier index de guidage 12 hors du fourreau 8, comme montré sur la figure 9,
- réaliser sur mesure le deuxième index de guidage 12' de sorte que l'orientation et la position relatives de l'axe géométrique de la première portion 12'a du deuxième index 12' par rapport à l'axe de l'alésage 15' de la seconde portion 12'b du deuxième index correspondent à l'orientation et la position relatives de l'axe géométrique de la première portion 12a du premier index 12 par rapport à l'axe de perçage déterminé,
- insérer la première portion 12'a du deuxième index de guidage 12' dans le logement 9 du fourreau 8, comme montré sur la figure 10,
- adapter les parties de recouvrement 5' du dispositif de guidage 2 sur la mâchoire du patient de telle sorte que les empreintes obtenues sur ces dernières lors de l'étape de thermoformage coopèrent avec les reliefs complémentaires des dents du patient adjacentes à l'édentement,
- introduire un foret de perçage selon l'axe de l'alésage 15' ménagé dans la seconde portion 12'b de l'index de guidage 12' de manière à réaliser un logement dans la mâchoire du patient destiné à recevoir un implant dentaire.

Il convient de noter que la réplique 17 comporte avantageusement une partie rétentive 19. De préférence, la réplique 17 est fixée sur le modèle 16 avec du silicone fluide à empreinte qui englobera au moins une portion de la réplique 17 et sa partie rétentive 19.

Selon une variante de mise en oeuvre du procédé, l'étape consistant à introduire un foret de perçage selon l'axe de l'alésage 15' pourrait être remplacée par une étape consistant à positionner un canon de perçage cylindrique (non représenté sur la figure 10) dans l'alésage 15' de la seconde portion 12'b de l'index de guidage 12', à introduire un foret de perçage d'un premier diamètre selon l'axe de l'alésage 15' ménagé dans la seconde portion 12'b de l'index de guidage 12' de manière à réaliser un logement dans la mâchoire du patient, à retirer le canon de perçage de l'alésage 15', et à introduire un foret de perçage d'un second diamètre plus grand que le premier diamètre selon l'axe de l'alésage 15' ménagé dans la seconde portion 12'b de l'index de guidage 12' de manière à augmenter le diamètre du logement ménagé dans la mâchoire du patient.

Il convient de noter que l'étape consistant à positionner un canon de perçage cylindrique dans l'alésage 15' de la seconde portion 12'b de l'index de guidage 12' pourrait être réalisée avant l'étape consistant à adapter les parties de recouvrement 5' du dispositif de guidage 2 sur la mâchoire du patient.

Selon une variante de réalisation du dispositif de guidage 2 non représentée sur les figures, l'orientation et la position relatives de l'axe géométrique de la première portion 12a du premier index de guidage 12 par rapport à l'axe géométrique de la seconde portion 12b du premier index de guidage 12 correspondent à l'orientation et la position relatives de l'axe géométrique de la première portion 12'a du deuxième index de guidage 12' par rapport à l'axe géométrique de la seconde portion 12'b du deuxième index de guidage 12'. En outre, selon cette variante de réalisation, les deux index de guidage sont fournis simultanément au chirurgien.

Selon cette variante de réalisation, l'étape du procédé de perçage consistant à réaliser sur mesure le deuxième index de guidage est remplacée par une étape, réalisée après l'étape d'insertion de la première portion 12'a du deuxième index de guidage 12' dans le logement 9 du fourreau 8, consistant à:
- si nécessaire, chauffer la partie de liaison 6 du corps 3 de manière à la rendre malléable et déplacer le bras de liaison 12'c du deuxième index de guidage 12' de manière à modifier l'orientation de la seconde portion 12'b du deuxième index de guidage 12' afin que l'axe de l'alésage 15' de cette dernière corresponde sensiblement à l'axe de perçage déterminé,
- refroidir (ou laisser refroidir) la partie de liaison 6 du corps 3.

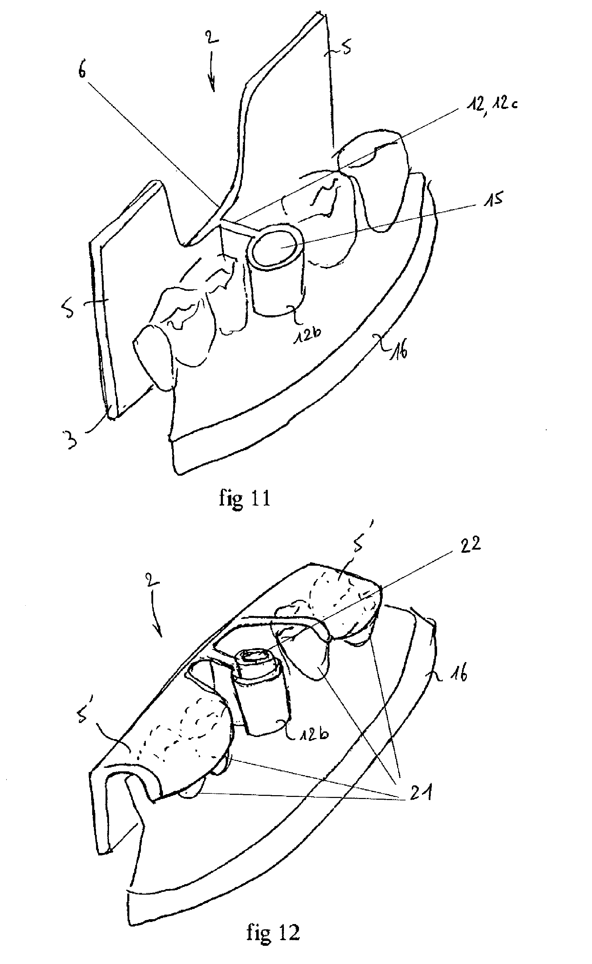

Les figures 11 et 12 représentent un dispositif de guidage 2 selon un deuxième mode de réalisation qui diffère de celui de la figure 1 essentiellement en ce qu'il ne comprend qu'un seul index de guidage 12, et en ce que l'index de guidage 12 et le corps 3 sont réalisés en une seule pièce.

De préférence, l'index de guidage 12 et le corps 3 sont réalisés en matière thermoformable par moulage par injection.

Lorsque le dispositif de guidage 11 représenté sur la figure 11 est réalisé en matière synthétique, par exemple en matière plastique, il est avantageux de positionner un canon de perçage 22 métallique cylindrique dans l'alésage 15 de la seconde portion 12b de l'index de guidage 12 avant de réaliser le perçage selon l'axe de l'alésage, comme cela est montré sur la figure 12.

Selon ce mode de réalisation du dispositif de guidage 11, l'étape du procédé de perçage consistant à positionner le dispositif de guidage sur le modèle consiste avantageusement à réaliser une perforation dans le modèle 16 selon l'axe géométrique de la dent manquante, à engager une tige cylindrique dans cette perforation, et à engager la seconde portion 12b de l'index de guidage 12 autour de cette tige cylindrique.

En outre, selon ce mode de réalisation, l'étape du procédé de perçage consistant chauffer la partie de liaison du corps et à déplacer le bras de liaison de l'index de guidage pourrait être remplacée par une étape consistant à :
- si nécessaire, chauffer le bras de liaison 12c de l'index de guidage 12 de manière à la rendre malléable et déformer le bras de liaison 12c de manière à modifier l'orientation de la seconde portion 12b de l'index de guidage 12 afin que l'axe de l'alésage 15 de cette dernière corresponde sensiblement à l'axe de perçage déterminé,
- refroidir (ou laisser refroidir) le bras de liaison 12c.

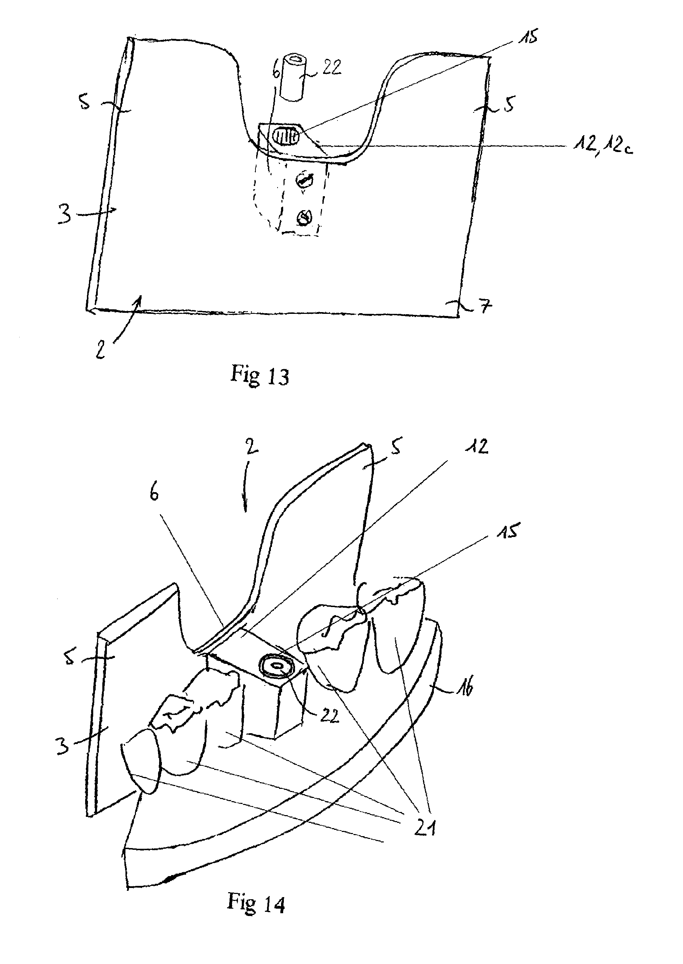

Les figures 13 et 14 représentent un dispositif de guidage selon un troisième mode de réalisation qui diffère de celui des figures 11 et 12 essentiellement en ce que l'index de guidage 12 est fixé par vissage sur la partie de liaison 6 du corps 3. Avantageusement, l'index de guidage 12 est métallique, et de préférence en acier inoxydable.

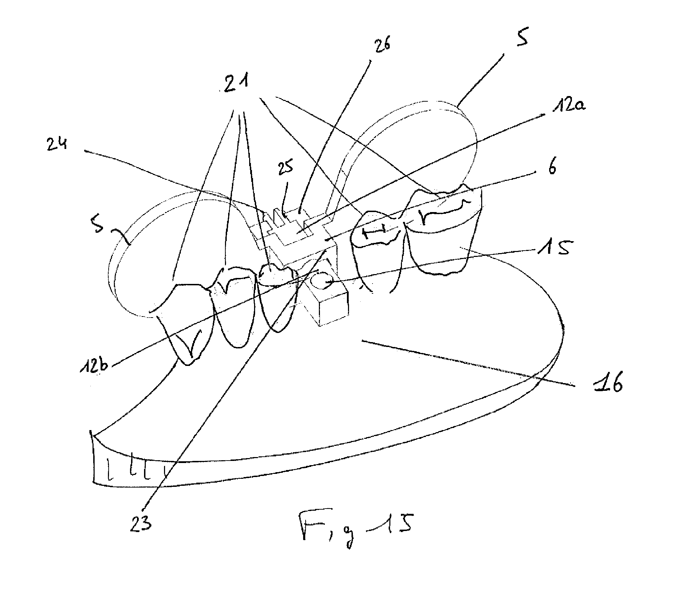

La figure 15 représente un dispositif de guidage 2 selon un quatrième mode de réalisation qui diffère de celui des figures 1 à 4 essentiellement en ce que la partie de liaison 6 du corps 3 comporte un manchon 23 de section sensiblement rectangulaire dans lequel est destiné à être monté l'index de guidage 12, et en ce que la première portion 12a de l'index de guidage 12 comporte deux pattes d'encliquetage 24 élastiquement déformables agencées pour coopérer avec une fente d'encliquetage 25 ménagée dans la partie de liaison 6 du corps 3 de manière à verrouiller l'index de verrouillage 12 sur cette dernière.

Avantageusement, le manchon 23 comporte une première extrémité ouverte permettant le passage de l'index de guidage 12 et une seconde extrémité partiellement obturée par une paroi de fond 26 dans laquelle est ménagée la fente d'encliquetage 25.

Il convient de noter que le manchon 23 et les pattes d'encliquetage 24 sont conformées de telle sorte que l'index de guidage 12 peut être démonté et retiré du manchon 23 en déformant élastiquement les pattes d'encliquetage 24 de manière les rapprocher l'une de l'autre.

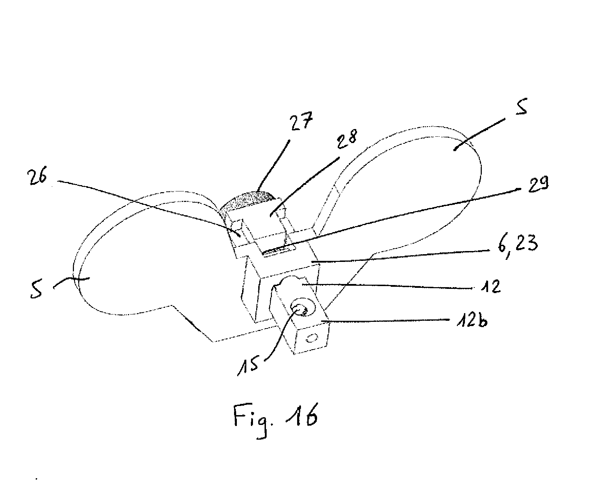

La figure 16 représente un dispositif de guidage 2 selon un cinquième mode de réalisation qui diffère de celui de la figure 15 essentiellement en ce que l'index de guidage 12 est agencé pour être monté coulissant dans le manchon 23 selon une direction sensiblement perpendiculaire à l'axe de l'alésage 15 de la seconde portion 12b de l'index de guidage 12. Selon ce mode de réalisation, l'index de guidage 12 est métallique, de préférence en acier inoxydable, et le dispositif de guidage 2 comporte des moyens de réglage agencés pour régler la position de l'index de guidage 12 dans le manchon 23.

Les moyens de réglage sont montés de manière amovible sur la partie de liaison 6 du corps 3, et comportent une mollette de réglage 27 montée mobile en rotation sur un étrier 28 agencé pour être monté par emboîtage sur la partie de liaison 6 du corps 3 de manière à immobiliser en translation la molette de réglage 27 par rapport au manchon 23 selon l'axe de ce dernier. La molette de réglage 27 comprend une tige filetée 29 agencée pour coopérer avec un alésage taraudé (non représenté sur les figures) ménagé dans la première portion 12a de l'index de guidage 12, l'axe de cet alésage taraudé étant perpendiculaire à l'axe de l'alésage 15 ménagé sur la seconde portion 12b de l'index de guidage 12. Ainsi, tout actionnement de la molette de réglage 27 permet de réaliser des translations bidirectionnelles de l'index de guidage 12 à l'intérieur du manchon 4. Ces dispositions permettent, au cours de l'intervention chirurgicale, d'ajuster en translation le positionnement de l'alésage 15 de la seconde portion 12b de l'index de guidage 12 de telle sorte que celui-ci corresponde à un axe idéal de perçage.

Selon une variante de réalisation de l'invention, le dispositif de guidage 2 pourrait comporter un corps 3 similaire à celui représenté sur les figures 15 et 16, un premier index de guidage identique à celui représenté sur la figure 15 et un second index de guidage identique à celui représenté sur la figure 16. Selon cette variante de réalisation, le premier index de guidage pourrait être utilisé comme guide radiologique et le second index de guidage comme guide de perçage. Ces dispositions permettent au vu des images radiographiques obtenues avec le premier index servant de guide radiologique de rectifier la position de l'axe de l'alésage du second index par activation de la molette. Le second index de guidage comporte de préférence des moyens de repérage, tels qu'un marquage, agencés pour représenter le positionnement initial de l'alésage 15 du premier index.

Comme il va de soi, l'invention ne se limite pas aux seules formes d'exécution de ce dispositif de guidage, décrites ci-dessus à titre d'exemples, elle en embrasse au contraire toutes les variantes de réalisation.

## Revendications

1. Dispositif de guidage (2) d'outil de perçage pour la mise en place d'au moins un implant dentaire, **caractérisé** ne ce qu'il comporte :
- un corps (3), réalisé en matière thermoformable, comportant une échancrure (4) délimitant deux parties latérales (5) destinées à être thermoformées pour former des parties de recouvrement (5') agencées pour s'adapter sur les dents adjacentes à un édentement et/ou sur au moins une portion de la muqueuse buccale adjacente à l'édentement, et une partie médiane de liaison (6) s'étendant dans le prolongement de l'échancrure,
- au moins un index de guidage (12) comportant des première et seconde portions (12a, 12b) reliées l'une à l'autre, la première portion (12a) étant reliée à la partie de liaison (6) du corps, la seconde portion (12b) comportant un alésage traversant (15) dont l'axe est agencé pour s'étendre sensiblement selon l'axe géométrique d'une dent manquante ou un axe de perçage prédéterminé, lorsque les parties de recouvrement (5') sont adaptées sur les dents adjacentes à l'édentement et/ou sur la muqueuse buccale.

2. Dispositif de guidage selon la revendication 1, **caractérisé en ce que** les première et seconde portions (12a, 12b) de l'index de guidage (12) sont reliées l'une à l'autre par un bras de liaison (12c) destiné à s'étendre selon le plan médian vestibulo-lingual de la dent manquante.

3. Dispositif de guidage selon la revendication 1 ou 2, **caractérisé en ce que** la première portion (12a) de l'index de guidage (12) est montée de manière amovible sur la partie de liaison (6) du corps (3).

4. Dispositif de guidage selon la revendication 3, **caractérisé en ce que** la partie de liaison (6) du corps comporte un fourreau (8) comprenant un logement (9) dans lequel est destinée à être insérée la première portion (12a) de l'index de guidage (12).

5. Dispositif de guidage selon la revendication 4, **caractérisé en ce que** l'axe du logement (9) ménagé dans le fourreau (8) est sensiblement parallèle à l'axe de l'alésage (15) ménagé dans la seconde portion (12b) de l'index de guidage (12) lorsque la première portion de ce dernier est insérée dans le logement ménagé dans le fourreau.

6. Dispositif de guidage selon l'une des revendications 1 à 3, **caractérisé en ce que** la partie de liaison (6) du corps (3) comporte un manchon (23), et **en ce que** l'index de guidage (12) est agencé pour être monté coulissant dans ledit manchon selon une direction transversale à l'axe de l'alésage (15) de la seconde portion (12b) de l'index de guidage, et de préférence selon une direction sensiblement perpendiculaire à l'axe de l'alésage de la seconde portion de l'index de guidage.

7. Dispositif de guidage selon la revendication 6, **caractérisé en ce qu'**il comporte des moyens de réglage agencés pour régler la position de l'index de guidage (12) dans ledit manchon (23), les moyens de réglage étant de préférence montés de manière amovible sur la partie de liaison du corps.

8. Dispositif de guidage selon l'une des revendications 1 à 7, **caractérisé en ce qu'**il comporte un plot radio-opaque, de préférence tubulaire, monté coaxialement dans l'alésage ménagé dans la seconde portion de l'index de guidage, le plot radio-opaque étant de préférence monté de manière amovible dans l'alésage ménagé dans la seconde portion de l'index de guidage.

9. Dispositif de guidage selon l'une des revendications 1 à 8, **caractérisé en ce qu'**il comprend un premier index de guidage et un deuxième index de guidage, la première portion de chaque index de guidage étant agencée pour être montée de manière amovible sur la partie de liaison (6) du corps (3).

10. Dispositif de guidage selon la revendication 9, **caractérisé en ce que** la partie de liaison (6) du corps comporte un manchon (23) dans lequel est susceptible d'être monté, au choix d'un opérateur, le premier ou le deuxième index de guidage, **en ce que** la première portion (12a) du premier index de guidage (12) comporte au moins une patte d'encliquetage (24) agencée pour coopérer avec une fente d'encliquetage (25) ménagée dans la partie de liaison (6) du corps, et **en ce que** le deuxième index de guidage (12) est agencé pour être monté coulissant dans le manchon (23) selon une direction transversale à l'axe de l'alésage (15) de la seconde portion (12b) du deuxième index de guidage, et de préférence selon une direction sensiblement perpendiculaire à l'axe de l'alésage de la seconde portion de l'index de guidage.

11. Dispositif de guidage selon la revendication 9, **caractérisé en ce que** l'orientation et la position relatives de l'axe géométrique de la première portion (12a) du premier index de guidage (12) par rapport à l'axe géométrique de la seconde portion (12b) du premier index de guidage (12) correspondent à l'orientation et la position relatives de l'axe géométrique de la première portion (12'a) du deuxième index de guidage (12') par rapport à l'axe géométrique de la seconde portion (12'b) du deuxième index de guidage (12').

12. Procédé de positionnement d'un axe de perçage pour la mise en place d'au moins un implant dentaire, **caractérisé en ce qu'**il comprend les étapes consistant à :
a) prévoir un dispositif de guidage (2) selon l'une des revendications 1 à 11,
b) réaliser un modèle (16), de préférence en plâtre, à partir d'une empreinte d'une zone édentée de la bouche du patient,
c) positionner le dispositif de guidage (2) sur le modèle (16) de telle sorte que l'axe de l'alésage (15) de la seconde portion (12b) de l'index de guidage (12) s'étende sensiblement selon l'axe géométrique de la dent manquante,
d) thermoformer les parties latérales (5) du corps (3) sur les dents (21) du modèle adjacentes à l'édentement et/ou sur au moins une portion de la muqueuse buccale du modèle adjacente à l'édentement, de manière à former des parties de recouvrement (5') agencées pour s'adapter sur les dents et/ou la muqueuse buccale du patient,
e) refroidir ou laisser refroidir les parties de recouvrement (5'),
f) retirer le dispositif de guidage (2) du modèle (16),
g) adapter les parties de recouvrement (5') du dispositif de guidage (2) sur les dents du patient adjacentes à l'édentement et/ou sur la portion de la muqueuse buccale du patient adjacente à l'édentement.

13. Procédé selon la revendication 12, **caractérisé en ce que** l'étape a) consiste à prévoir un dispositif de guidage (2) selon la revendication 2 ou l'une des revendications 3 à 11 lorsqu'elles dépendent de la revendication 2, et **en ce que** l'étape c) consiste à positionner le dispositif de guidage sur le modèle (16) de telle sorte que l'axe de l'alésage de la seconde portion (12b) de l'index de guidage (12) s'étende selon l'axe géométrique de la dent manquante, et le bras de liaison (12c) de l'index s'étende selon le plan médian vestibulo-lingual de la dent manquante.

14. Procédé selon la revendication 12 ou 13, **caractérisé en ce qu'**il comprend une étape réalisée après l'étape g) consistant à :
- obtenir une visualisation de type radiographique de la mâchoire du patient équipé du dispositif de guidage,
- déterminer à partir des vues radiographiques obtenues un axe de perçage pour positionner l'implant dentaire,
- si nécessaire, chauffer la partie de liaison (6) du corps (3) de manière à la rendre malléable et déplacer l'index de guidage (12) de manière à modifier l'orientation de la seconde portion (12b) de l'index de guidage afin que l'axe de l'alésage (15) de cette dernière corresponde sensiblement à l'axe de perçage déterminé,
- adapter les parties de recouvrement (5') du dispositif de guidage (2) sur les dents du patient adjacentes à l'édentement et/ou sur la portion de la muqueuse buccale du patient adjacente à l'édentement.

15. Procédé selon la revendication 12 ou 13, **caractérisé en ce que** l'étape a) consiste à prévoir un dispositif de guidage (2) selon la revendication 10 et à monter la première portion (12a) du premier index de guidage (12) sur la partie de liaison (6) du corps, et **en ce qu'**il comprend une étape réalisée après l'étape g) consistant à :
- obtenir une visualisation de type radiographique de la mâchoire du patient équipé du dispositif de guidage,
- déterminer à partir des vues radiographiques obtenues un axe de perçage pour positionner l'implant dentaire,
- retirer la première portion (12a) du premier index de guidage (12) de la partie de liaison (6) du corps,
- monter la première portion (12'a) du deuxième index de guidage (12') sur la partie de liaison du corps,
- si nécessaire, déplacer le deuxième index de guidage (12') à l'intérieur du manchon (14) de manière à modifier l'orientation de la seconde portion (12'b) du deuxième index de guidage afin que l'axe de l'alésage (15') de cette dernière corresponde sensiblement à l'axe de perçage déterminé,
- adapter les parties de recouvrement (5') du dispositif de guidage (2) sur les dents du patient adjacentes à l'édentement et/ou sur la portion de la muqueuse buccale du patient adjacente à l'édentement.
